# EUROPÄISCHE PATENTSCHRIFT

(11) **EP 4 082 344 B1**
(45) Veröffentlichungstag und Bekanntmachung des Hinweises auf die Patenterteilung: **07.06.2023**
(21) Anmeldenummer: 22160662.7
(22) Anmeldetag: 08.03.2022
(51) Int. Cl.: A21B 3/07, A21C 9/08

(54) **WAGEN ZUM EINBRINGEN VON ZU BACKENDEN TEIGROHLINGEN**
TROLLEY FOR INTRODUCING PIECES OF DOUGH TO BE BAKED
CHARIOT DE CHARGEMENT DES PÂTONS DE PÂTE À CUIRE

(30) Priorität: 26.04.2021 AT 792021
(43) Veröffentlichungstag der Anmeldung: 02.11.2022
(73) Patentinhaber: Ernst Drexel KG, 6845 Hohenems (AT)
(72) Erfinder: Drexel, Günter, 6845 Hohenems (AT)
(74) Vertreter: Torggler & Hofmann Patentanwälte - Rankweil

(56) Entgegenhaltungen:
- AT-B- 389 983
- AT-B- 391 398

## Beschreibung

Die vorliegende Erfindung betrifft einen Wagen zum Einbringen von zu backenden Teigrohlingen gemäß des Oberbegriffs des Patentanspruchs 1.

In Bäckereien kommen heutzutage in der Regel mehretagige Backöfen zum Einsatz, wobei in jede Backofenetage des Backofens Teigrohlinge für den Backvorgang eingebracht werden können. Das Einbringen der Teigrohlinge erfolgt beim Stand der Technik mit sogenannten Tuchabziehapparaten. Es handelt sich dabei um Gestelle, auf denen ein Abziehtuch über Umlenkrollen umlaufend gelagert ist. Die in den Backofen einzubringenden Teigrohlinge liegen auf dem Abziehtuch. Beim manuellen Einbringen der Teigrohlinge in den mehretagigen Backofen mittels Tuchabziehapparat wird der Tuchabziehapparat mit den darauf gelagerten, noch zu backenden Teigrohlingen von zwei Bedienpersonen in eine Backofenetage des mehretagigen Backofens von Hand eingeschoben. Dort wird dann das Abziehtuch mit einer geeigneten Vorrichtung in den Backofen eingehängt, sodass beim anschließenden manuellen Herausziehen des Tuchabziehapparates aus der Backofenetage das Abziehtuch auf dem Tuchabziehapparat umläuft und die Teigrohlinge entsprechend in der Backofenetage des Backofens abgelegt werden. Dies ist an sich bekannt, hat aber den Nachteil, dass das Anheben der mit den Teigrohlingen bestückten Tuchabziehapparate sowie das Einschieben und das Herausziehen in die und aus den entsprechenden Backofenetagen des Backofens für die dazu benötigten Bedienpersonen sehr kraftaufwendig ist. Außerdem werden immer zwei Bedienpersonen benötigt, um die Teigrohlinge mittels eines Tuchabziehapparats entsprechend in die jeweilige Backofenetage einzubringen.

Um den manuellen Aufwand zu reduzieren, sind beim Stand der Technik bereits gattungsgemäße Wagen zum Einbringen von zu backenden Teigrohlingen in einen mehretagigen Backofen bekannt. Bei diesen sind in dem Wagen in übereinander angeordneten Lageretagen Tuchabziehapparate gelagert, welche motorisch angetrieben in die jeweilige Backofenetage des mehretagigen Backofens eingefahren und wieder herausgezogen werden können.

Die DE 20 2008 014 112 U1 zeigt z.B. eine Variante eines solchen Wagens, bei der ein motorischer Antrieb mittels eines Seils oder einer Kette an der Decke eines Gebäudes in der Nähe des Ofens verschieblich gelagert ist. Dieser motorische Antrieb kann nacheinander an die einzelnen Lageretagen angekoppelt werden, um die jeweiligen Tuchabziehapparate nacheinander in die verschiedenen Lageretagen des mehretagigen Backofens einzuschieben und sie wieder herauszuziehen.

Die DE 24 17 114 offenbart einen gattungsgemäßen Wagen, bei dem über einen gemeinsamen Antrieb alle Tuchabziehapparate des Wagens motorisch in die entsprechenden Backofenetagen des mehretagigen Backofens eingefahren und wieder herausgezogen werden können. Die ES 1 017 248 U zeigt eine im Grundsatz zur DE 24 17 114 A ähnliche Technologie.

Die AT 389 983 B und die AT 391 398 B zeigen jeweils gattungsfremden Stand der Technik. In der AT 389 983 B sind die Ablegevorrichtungen in fixer Relation zueinander und zum Fahrgestell angeordnet, sodass der gesamte Wagen zum Einbringen der Teigrohlinge in den Backofen eingeschoben werden muss. In der AT 391 983 B geht es um einen Wagen zum Beladen eines Stikkenwagens, welcher rein manuell bedient werden muss.

Aufgabe der Erfindung ist es, einen Wagen der eingangs genannten Art dahingehend zu verbessern, dass er einen möglichst hohen Grad der Flexibilität beim Einbringen der zu backenden Teigrohlinge in den mehretagigen Backofen erlaubt.

Zur Lösung dieser Aufgabe wird ein Wagen gemäß Patentanspruch 1 vorgeschlagen.

Durch das Vorsehen zumindest eines Motors pro Lageretage ist es möglich, jeden Tuchabziehapparat unabhängig von den Tuchabziehapparaten in den anderen Lageretagen des Wagens in die entsprechende Backofenetage des mehretagigen Backofens einzubringen und auch wieder aus dieser Backofenetage des Backofens herauszuziehen, sodass die einzelnen Tuchabziehapparate nacheinander, aber auch gleichzeitig in den mehretagigen Backofen eingefahren werden können. Es wird dadurch auch möglich, die Tuchabziehapparate der verschiedenen Lageretagen des Wagens in verschiedene Backöfen einzubringen. Durch die Erfindung kann sehr individuell und flexibel auf verschiedene, jeweils zu erfüllende Randbedingungen wie z.B. Backzeiten, Temperaturen und dergleichen für die verschiedenen Teigrohlinge eingegangen werden. Außerdem haben erfindungsgemäße Wagen auch den Vorteil, dass eine einzelne Bedienperson ohne großen Kraftaufwand dazu in der Lage ist, die Teigrohlinge in die verschiedenen Backofenetagen des mehretagigen Backofens mittels des erfindungsgemäßen Wagens einzubringen.

Der Vollständigkeit halber wird darauf hingewiesen, dass bei der Erfindung zumindest ein Motor pro Lageretage vorgesehen ist. Es können aber auch zwei oder mehr Motoren pro Lageretage vorgesehen sein, um den jeweiligen Tuchabziehapparat dieser Lageretage zwischen seiner Ausgangsstellung und seiner Endstellung hin und her zu verfahren.

Bei der Erfindung ist auch vorgesehen, dass der Wagen zumindest eine Steuereinrichtung aufweist, mit der der zumindest eine Motor jeder Lageretage unabhängig von den Motoren der anderen Lageretagen des Wagens zum hin und her Verfahren des jeweiligen Tuchabziehapparates in dieser Lageretage zwischen seiner Ausgangsstellung und seiner Endstellung ansteuerbar ist. Die Steuereinrichtung kann dabei eine zentrale Eingabeeinheit aufweisen. Diese kann z.B. entsprechende Schaltelemente umfassen, mit denen die Motoren der jeweiligen Lageretage individuell angesteuert werden können. Es kann sich um eine zentrale Eingabeeinheit handeln, mit der alle Motoren aller Lageretagen des Wagens individuell angesteuert werden können. Es ist aber auch denkbar, pro Lageretage jeweils eine individuelle Eingabeeinheit vorzusehen, mit der dann der oder die Motoren der jeweiligen Lageretage angesteuert wird bzw. werden. Die zumindest eine Eingabeeinheit wird jedenfalls günstigerweise an einer Stelle am Wagen angeordnet, welche beim Einbringen der zu backenden Teigrohlinge in den mehretagigen Backofen für die Bedienperson gut zugänglich ist.

Um die flexible Einsetzbarkeit des erfindungsgemäßen Wagens weiter zu verbessern, sehen bevorzugte Varianten vor, dass der Wagen zumindest einen wiederaufladbaren Akkumulator zur Versorgung der Motoren der Lageretagen mit elektrischem Strom aufweist. Hierdurch wird sichergestellt, dass beim Einbringen der Teigrohlinge mittels des erfindungsgemäßen Wagens in den mehretagigen Backofen auf keine Stromversorgungskabel oder dergleichen geachtet werden muss. Mit dem wieder aufladbaren Akkumulator des Wagens wird günstigerweise natürlich auch die Steuereinrichtung mit elektrischem Strom versorgt.

Die Tuchabziehapparate könnten auch als Einschussapparate bezeichnet werden. Entsprechend könnte man auch beim erfindungsgemäßen Wagen von einem Einschusswagen sprechen. Bei den Motoren zum Hin- und Herverfahren des jeweiligen Tuchabziehapparates in der jeweiligen Lageretage handelt es sich bevorzugt um Elektromotoren. Günstigerweise sind der oder die Akkumulatoren wie auch die Steuereinrichtung abgesehen von ihrer Bedieneinheit möglichst weit unten im Wagen angeordnet. Z.B. ist es möglich, diese Bauteile in einer Wanne ganz unten im Wagen anzuordnen. Hierdurch wird erreicht, dass der Schwerpunkt des Wagens möglichst tief gehalten wird, was zur Verbesserung der Kippstabilität beiträgt.

Bevorzugte Varianten erfindungsgemäßer Wagen sehen vor, dass der Wagen, die Lageretagen und die jeweiligen Tuchabziehapparate parallel zu einer Längsrichtung des Wagens längserstreckt sind und die Tuchabziehapparate in der jeweiligen Lageretage jeweils parallel zur Längsrichtung zwischen ihrer jeweiligen Ausgangsstellung und ihrer jeweiligen Endstellung hin und her verfahrbar sind und jede Lageretage mit ihrem in der Ausgangsstellung angeordneten Tuchabziehapparat mittels zumindest einer Auszugsvorrichtung der jeweiligen Lageretage parallel zu einer Querrichtung des Wagens aus dem Grundgestell des Wagens seitlich ausfahrbar und wieder in das Grundgestell einfahrbar ist, wobei die Längsrichtung des Wagens und die Querrichtung des Wagens zueinander orthogonal angeordnet sind. Bei diesen Varianten kann jede Lageretage einzeln mit ihrem in der Ausgangsstellung angeordneten Tuchabziehapparat nach Art einer Schublade seitlich aus dem Grundgestell des Wagens herausgefahren und wieder in diesen eingeschoben werden. In der seitlich ausgefahrenen Stellung können z.B. Reinigungs- und Wartungsarbeiten durchgeführt werden. Außerdem ist es grundsätzlich auch möglich, den Tuchabziehapparat in der seitlich ausgefahrenen Stellung der jeweiligen Lageretage mit neuen zu backenden Teigrohlingen zu beladen.

Eine bevorzugte Variante für das Beladen des jeweiligen Tuchabziehapparats der jeweiligen Lageretage mit neuen zu backenden Teigrohlingen sieht aber vor, dass die Tuchabziehapparate zum Beladen aus der jeweiligen Lageretage des Wagens entnommen und z.B. auf einer Hebebühne oder dergleichen abgelegt werden. Mittels der Hebebühne können die aus dem Wagen bzw. der jeweiligen Lageretage entnommenen Tuchabziehapparate dann angehoben oder abgesenkt werden, sodass sie sich beim Beladen mit zu backenden Teigrohlingen für die Bedienperson in der optimalen Höhe befinden. Das Ausfahren und Einziehen des jeweiligen Tuchziehapparates aus bzw. in die jeweilige Lageretage des Wagens kann mittels der jeweiligen Motoren zum Hin- und Herverfahren des jeweiligen Tuchziehapparates erfolgen. Bevorzugt ist, insbesondere in diesem Zusammenhang, vorgesehen, dass der jeweilige Tuchabziehapparat der jeweiligen Lageretage und der zumindest eine Motor der jeweiligen Lageretage mittels einer Kopplungsvorrichtung in einem gekoppelten Zustand miteinander gekoppelt und in einem entkoppelten Zustand voneinander entkoppelt sind. Dies erlaubt es, dass der jeweilige Tuchabziehapparat zunächst aus der jeweiligen Lageretage ausgefahren und in der jeweiligen Höhe auf der Hebebühne abgelegt wird. Anschließend kann der jeweilige Tuchabziehapparat durch entsprechende Betätigung der Kopplungsvorrichtung in den entkoppelten Zustand gebracht werden, sodass der Tuchabziehapparat auf der Hebebühne liegend auf die optimale Höhe für das Beladen mit neuen, zu backenden Teigrohlingen gebracht werden kann. Ist der Beladevorgang abgeschlossen, so kann der Tuchabziehapparat mittels der Hebebühne wieder in die Höhe der entsprechenden Lageretage des Wagens verfahren und die Kopplungsvorrichtung wieder in den gekoppelten Zustand gebracht werden, um dann den mit den neuen, zu backenden Teigrohlingen beladenen Tuchabziehapparat mittels des Motors der jeweiligen Lageretage wieder in diese Lageretage des Wagens einzuziehen.

Bevorzugte Varianten der Erfindung sehen vor, dass die Kopplungsvorrichtung der jeweiligen Lageretage durch zumindest eine schwenkbar gelagerte Klinke und zumindest eine Klinkenaufnahme gebildet ist, wobei die Klinke in dem gekoppelten Zustand der Kopplungsvorrichtung in die Klinkenaufnahme eingreift und in dem entkoppelten Zustand von der Klinkenaufnahme losgelöst ist.

Besonders bevorzugt ist dabei wiederum vorgesehen, dass die zumindest eine Klinke schwenkbar am jeweiligen Tuchabziehapparat gelagert ist und die zumindest eine Klinkenaufnahme mittels des zumindest einen Motors der jeweiligen Lageretage entlang der jeweiligen Lageretage verfahrbar gelagert ist. Es wäre alternativ aber auch denkbar, die Klinke schwenkbar mittels des zumindest einen Motors der jeweiligen Lageretage entlang der jeweiligen Lageretage verfahrbar zu lagern und die Klinkenaufnahme entsprechend am Tuchabziehapparat auszubilden. Bevorzugt ist jedenfalls vorgesehen, dass für das Schwenken der Klinke ein entsprechender, von Hand bedienbarer Betätigungsmechanismus vorgesehen ist.

Der jeweilige Tuchabziehapparat weist in der Regel ein umlaufend verschiebbar gelagertes Abziehtuch auf, wobei vorzugsweise vorgesehen ist, dass das Abziehtuch mittels einer lösbaren Verbindungseinrichtung in einem verbundenen Zustand mit der jeweiligen Lageretage verbunden und in einem gelösten Zustand von der Lageretage losgelöst ist. Die umlaufend verschiebbare Lagerung von Abziehtüchern auf Tuchabziehapparaten ist beim Stand der Technik an sich bekannt. Der Tuchabziehapparat weist hierzu günstigerweise zumindest zwei Umlenkrollen auf, über die das Abziehtuch umlaufend gespannt ist und auf denen das Abziehtuch entsprechend umlaufend verschiebbar gelagert ist. Neu ist allerdings bei diesen Varianten der Erfindung die lösbare Verbindungseinrichtung, mit der das Abziehtuch im verbundenen Zustand mit der jeweiligen Lageretage verbunden und im losgelösten Zustand von der jeweiligen Lageretage losgelöst ist. Diese lösbare Verbindungseinrichtung ist günstigerweise als eine Art Rastverbindung ausgebildet. Besonders bevorzugt ist vorgesehen, dass die lösbare Verbindungseinrichtung in der aus dem Wagen maximal ausgefahrenen Endstellung des Tuchabziehapparates vorzugsweise selbsttätig, z.B. eben durch entsprechendes Einrasten, in den verbundenen Zustand mit der jeweiligen Lageretage gebracht wird. In anderen Worten wird das Abziehtuch somit mittels der lösbaren Verbindungseinrichtung bevorzugt in der ausgefahrenen Endstellung des Tuchabziehapparates selbsttätig mit der Lageretage verbunden. Beim anschließenden Einziehen des Tuchabziehapparates mittels des oder der Motoren der jeweiligen Lageretage wird dann das Abziehtuch automatisch umlaufend auf dem Tuchabziehapparat verschoben, wodurch die auf dem Abziehtuch liegenden, noch zu backenden Teigrohlinge nacheinander in der jeweiligen Backofenetage des mehretagigen Backofens abgelegt werden. Im dann wieder losgelösten Zustand kann das Abziehtuch zu einem späteren geeigneten Zeitpunkt wieder durch entsprechendes umlaufendes Verschieben auf dem Tuchabziehapparat in seine Ausgangsstellung gebracht werden. Dann können anschließend wieder neue, noch zu backende Teigrohlinge für den nächsten Einbringvorgang auf dem Abziehtuch bzw. Tuchabziehapparat abgelegt werden.

Grundsätzlich ist es möglich, den Wagen und entsprechend auch die Lageretagen und die jeweiligen Tuchabziehapparate in einer Breite auszubilden, die an die Breite der jeweiligen Backofenetage des mehretagigen Backofens angepasst ist, sodass die Fläche der jeweiligen Backofenetage des mehretagigen Backofens beim Backvorgang optimal ausgenutzt wird. Bei entsprechend breiten Backofenetagen der mehretagigen Backöfen kann dies aber zur Folge haben, dass die Wägen, ihre Lageretagen und die Tuchabziehapparate sehr breit und damit schwer werden. Um dies zu vermeiden, sehen bevorzuge Varianten der Erfindung vor, dass der Wagen zumindest eine Kuppeleinrichtung zum lösbaren Verbinden des Wagens mit einem anderen Wagen, vorzugsweise gleicher Bauart, aufweist. Dies erlaubt es, schmälere Wägen mit entsprechend schmäleren Lageretagen und entsprechend schmäleren Tuchabziehapparaten zu bauen, sodass diese besser handhabbar sind. Zur optimalen Ausnutzung der Breite der Backofenetagen des mehretagigen Backofens können dann zwei oder mehr Wägen mittels der Kuppeleinrichtung miteinander gekuppelt bzw. verbunden werden.

Um sicherzustellen, dass der erfindungsgemäße Wagen beim Beladevorgang optimal vor dem mehretagigen Backofen ausgerichtet ist, sehen bevorzugte Varianten der Erfindung vor, dass der Wagen eine Fixierungseinrichtung zum lösbaren Fixieren des Wagens vor dem Backofen, vorzugsweise auf einem Untergrund, aufweist. Mit dieser Fixierungseinrichtung kann dann bevorzugt auch sichergestellt werden, dass der Wagen beim Beladevorgang des Backofens in seiner Position verharrt, wodurch z.B. auch ein Kippen des Wagens oder dergleichen verhindert werden kann.

Weitere Merkmale und Einzelheiten bevorzugter Ausgestaltungsformen der Erfindung werden nachfolgend anhand eines Ausführungsbeispiels erläutert. Es zeigen:
- Fig. 1: eine schematisierte Darstellung eines erfindungsgemäßen Wagens vor einem Backofen;
- Fig. 2: den Bereich A aus Fig. 1 im Detail;
- Fig. 3: den Bereich B aus Fig. 1 im Detail;
- Fig. 4: eine schematisierte Draufsicht auf eine der Lageretagen des Wagens aus Fig. 1;
- Fig. 5: den Längsschnitt entlang der Schnittlinie CC aus Fig. 4;
- Fig. 6: eine Darstellung dieser Lageretage mit einem Tuchabziehapparat in der eingefahrenen Ausgangsstellung;
- Fig. 7: den Schnitt entlang der Schnittlinie DD aus Fig. 4;
- Fig. 8: das Detail E aus Fig. 7 vergrößert;
- Fig. 9: eine perspektivische Darstellung zu einer der Lageretagen des Wagens 1 aus Fig. 1;
- Fig. 10: den Bereich F aus Fig. 9 vergrößert;
- Fig. 11 und 12: Darstellungen zur Erläuterung des Klinkenmechanismus dieses Ausführungsbeispiels;
- Fig. 13: eine schematisierte Darstellung zur Verwendung einer Hebebühne zum Bestücken eines Tuchabziehapparats mit zu backenden Teigrohlingen;
- Fig. 14: eine Detailansicht auf zwei Lageretagen von zwei miteinander verbundenen Wägen;
- Fig. 15: den Horizontalschnitt entlang der Schnittlinie GG aus Fig. 14;
- Fig. 16: den Bereich H aus Fig. 15 vergrößert;
- Fig. 17: eine Darstellung zum Gebrauch der Auszugsvorrichtungen des Wagens aus Fig. 1;
- Fig. 18: den Horizontalschnitt entlang der Schnittlinie II aus Fig. 17 und
- Fig. 19: den Bereich J aus Fig. 18 vergrößert.

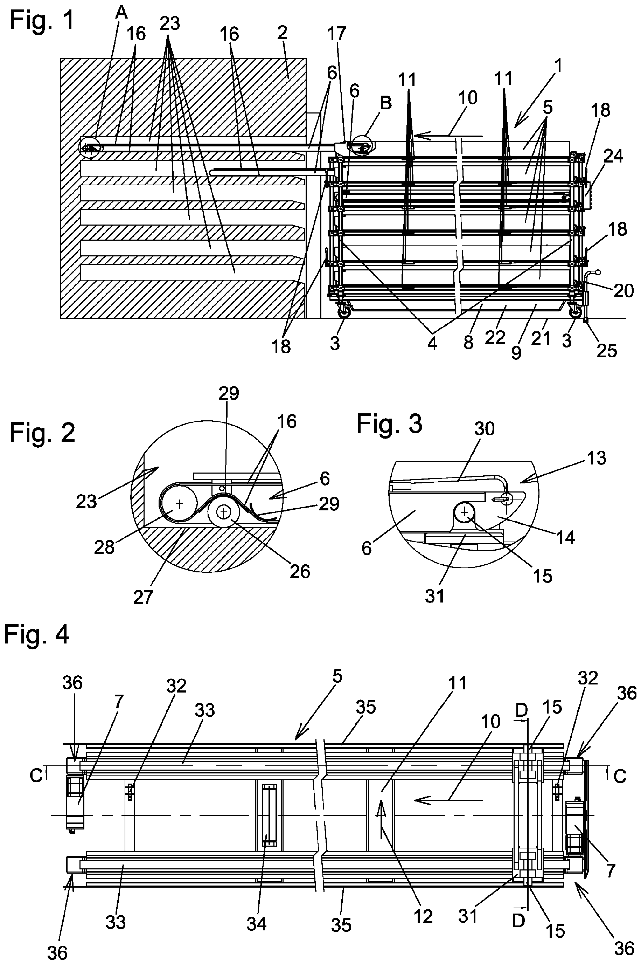

In Fig. 1 ist ein erfindungsgemäßer Wagen 1 vor einem mehretagigen Backofen 2 dargestellt. Der Wagen 1 weist ein auf Laufrädern 3 verfahrbar gelagertes Grundgestell 4 auf. Am Grundgestell 4 sind übereinander angeordnete Lageretagen 5 des Wagens 1 gehalten. In jeder der Lageretagen 5 befindet sich ein Tuchabziehapparat 6, welcher jeweils motorisch angetrieben zwischen einer maximal in den Wagen 1 eingefahrenen Ausgangsstellung und einer maximal aus dem Wagen 1 ausgefahrenen Endstellung hin und her verfahrbar gelagert ist. Der oberste Tuchabziehapparat 6 des Wagens 1 befindet sich in seiner maximal aus dem Wagen 1 ausgefahrenen Endstellung, in der entsprechend weit in die entsprechende oberste Backofenetage 23 des Backofens 2 hineinreicht. Der in Fig. 1 in der darunterliegenden Lageretage 5 angeordnete Tuchabziehapparat 6 ist gerade ein Stück weit in die entsprechende Backofenetage 23 eingeschoben. Alle anderen, in den darunter liegenden Lageretagen 5 angeordneten Tuchabziehapparate 6 befinden sich noch in ihrer maximal in den Wagen 1 eingefahrenen Ausgangsstellung.

Erfindungsgemäß ist vorgesehen, dass jede Lageretage 5 zumindest einen eigenen Motor 7 zum hin und her Verfahren des jeweiligen Tuchabziehapparates 6 dieser Lageretage 5 zwischen seiner Ausgangsstellung und seiner Endstellung aufweist. Im hier konkret dargestellten Ausführungsbeispiel weist jede Lageretage 5 zwei Motoren 7 auf, so wie dies weiter unten anhand der Fig. 4 bis 9 erläutert wird. Dies muss aber nicht zwingend so sein, auch ein einzelner Motor 7 pro Lageretage 5 könnte bei einer entsprechende Adaption des hier gezeigten Ausführungsbeispiels dazu ausreichen, den Tuchabziehapparat 6 der jeweiligen Lageretage 5 zwischen seiner Ausgangsstellung und seiner Endstellung hin und her zu verfahren. Bevorzugt handelt es sich bei den Motoren 7 um Elektromotoren.

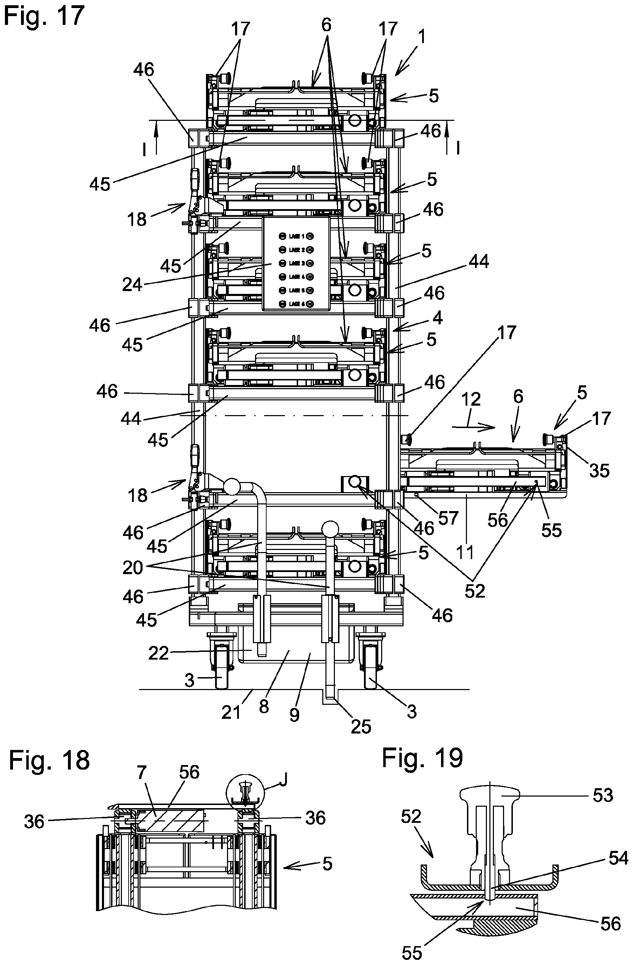

Der Wagen 1 weist eine Steuereinrichtung 8 auf, mit der der zumindest eine Motor 7 hier die jeweils zwei Motoren 7 jeder Lageretage 5 unabhängig von den Motoren 7 der anderen Lageretagen 5 des Wagens 1 zum hin und her Verfahren des jeweiligen Tuchabziehapparates 6 in dieser Lageretage 5 zwischen seiner Ausgangsstellung und seiner Endstellung ansteuerbar ist. Die Steuereinrichtung 8 umfasst in diesem Ausführungsbeispiel eine Bedieneinheit 24, welche in einer für die Bedienperson 42 gut zugänglichen Höhe am Grundgestell 4 angeordnet ist. Diese Bedieneinheit 24 ist in Fig. 17 in einer Frontalansicht zu sehen. Sie umfasst in diesem Ausführungsbeispiel für jede Lageretage 5 zwei Knöpfe. Durch Drücken des jeweiligen Knopfes werden die Motoren 7 der jeweiligen Lageretage 5 so angesteuert, dass der Tuchabziehapparat 6 entweder aus der Ausgangsstellung in die ausgefahrene Endstellung oder umgekehrt verfahren wird. Die Bedieneinheit 24 könnte aber natürlich auch anders aufgebaut sein und aussehen. Vorzugsweise ist sie jedenfalls relativ einfach und damit gut bedienbar ausgeführt.

Zur Stromversorgung der Motoren 7 der Lageretagen 5 weist der Wagen 1 einen wiederaufladbaren Akkumulator 9 auf. Dieser ist günstigerweise, wie hier auch dargestellt, zusammen mit den, abgesehen von der Bedieneinheit 24, anderen Komponenten der Steuereinrichtung 8 in einer Wanne 22 angeordnet. Diese Wanne 22 befindet sich günstigerweise ganz unten im Wagen 1, sodass der Wagen 1 einen möglichst tiefen Schwerpunkt hat. Mittels des Akkumulators 9 können in bevorzugten Ausgestaltungsformen, wie der hier gezeigten, nicht nur die Motoren 7 sondern auch die Steuereinrichtung 8 und/oder auch noch andere elektrische Komponenten des Wagens 1 mit Strom versorgt werden. Die Verwendung eines Akkumulators 9 hat vor allem den Vorteil, dass beim Verfahren des Wagens 1 und bei seiner Positionierung vor dem Backofen 2 keine Kabel oder dergleichen berücksichtigt werden müssen.

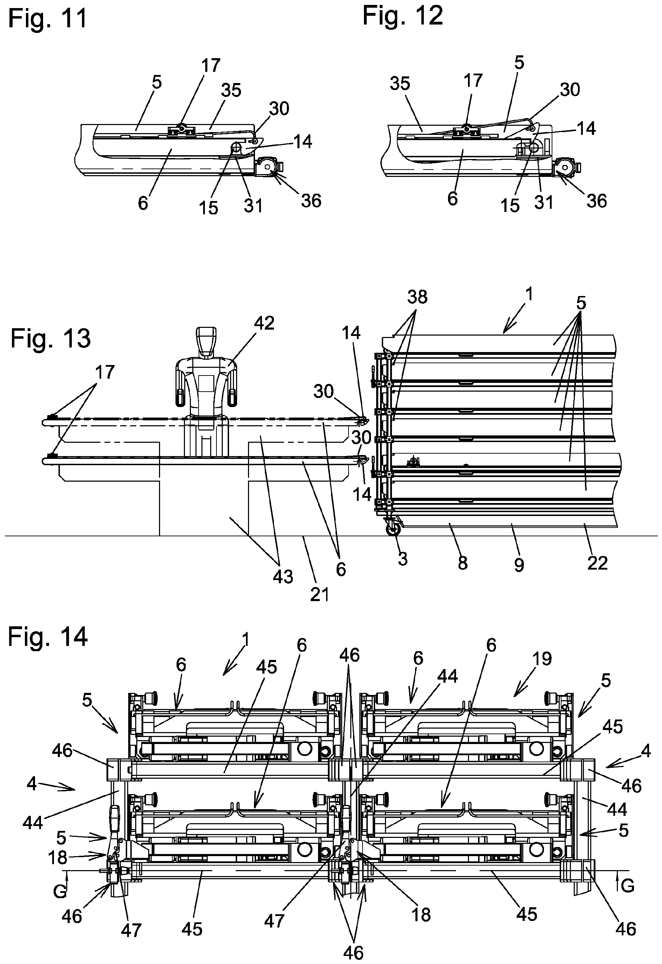

Der hier in Fig. 1 gezeigte Wagen 1 weist Kuppeleinrichtungen 18 auf, mit denen der Wagen 1 mit einem anderen Wagen 19, vorzugsweise gleicher Bauart, verbunden werden kann. Diese Kuppeleinrichtungen 18 sind optional. Das miteinander Kuppeln der Wägen 1 und 19 ist vor allem dann von Interesse, wenn die Backofenetagen 23 in der Richtung normal zur Zeichenebene der in Fig. 1 sehr breit sind. In solchen Fällen können zwei oder mehr Wägen 1 bzw. 19 mittels der Kuppeleinrichtung 18 miteinander gekuppelt werden, um so die Backofenetagen 23 möglichst in ihrer vollen Breite mit zu backenden Teigrohlingen beladen zu können. Dies muss aber nicht zwingend so sein. Natürlich kann man bei erfindungsgemäßen Wägen 1 die Lageretagen 5 und die Tuchabziehapparate 6 auch so breit ausgestalten, dass jeweils ein einziger Wagen 1 dazu ausreicht, die Backofenetagen 23 in voller Breite mit zu backenden Teigrohlingen zu befüllen. Die hier bei diesem Ausführungsbeispiel realisierte Art und Weise der Kupplung eines Wagens 1 mit einem anderen Wagen 19 wird weiter hinten anhand der Fig. 14 bis 16 noch weiter im Detail ausgeführt.

Die Wägen 1 sind günstigerweise so ausgelegt, dass sie von einer einzelnen Bedienperson 42 mit ihren Laufrädern 3 auf dem Untergrund 21 so vor den mehretagigen Backofen 2 gefahren werden können, dass die einzelnen Tuchabziehapparate 6 gleichzeitig oder nacheinander in die entsprechenden Backofenetagen 23 eingefahren werden können, um so die zu backenden Teigrohlinge in den mehretagigen Backofen 2 möglichst rasch einbringen zu können. Günstigerweise ist, wie hier auch realisiert, am Wagen 1 eine Fixierungseinrichtung 20 vorgesehen, mit der es möglich ist, den Wagen lösbar vor dem Backofen 2 zu fixieren. Bevorzugt erfolgt diese Fixierung mittels der Fixierungseinrichtung 20 auf dem Untergrund 21. Im hier gezeigten Ausführungsbeispiel ist die Fixierungseinrichtung 20 so ausgebildet, dass sie in entsprechend genau positionierte Fixierungslöcher 25 im Untergrund eingefahren werden kann. Dies sorgt einerseits dafür, dass der Wagen 1 richtig vor dem Backofen 2 positioniert wird. Darüber hinaus kann über die Fixierung des Wagens 1 mittels der Fixierungseinrichtung vor dem Backofen 2 auch erreicht werden, dass der Wagen 1 zusätzlich noch gegen ein Kippen oder ungewolltes Verschieben gesichert wird. Alternativ oder zusätzlich wäre es auch denkbar, Führungsschienen auf dem Untergrund 21 anzubringen, um so den Wagen 1 in einfacher Art und Weise vor dem Backofen 2 positionieren zu können. Natürlich könnten die Fixierungseinrichtungen 20 je nach Bedarf auch nicht in den Untergrund 21 eingreifen, sondern an anderen geeigneten Wänden oder dergleichen befestigt werden. Die Fixierungseinrichtungen 20 sind jedenfalls lösbar ausgebildet, sodass nach erfolgtem Befüllen des Backofens 2 mit den zu backenden Teigrohlingen der Wagen 1 auch wieder vom Bereich vor dem Backofen 2 weg gefahren werden kann.

Bevorzugt sind, wie hier auch vorgesehen, der Wagen 1, die Lageretagen 5 und die jeweiligen Tuchabziehapparate 6 parallel zur Längsrichtung 10 des Wagens 1 längserstreckt ausgebildet. Günstig ist es dann auch, wenn die Tuchabziehapparate 6 in der jeweiligen Lageretage 5 jeweils parallel zur Längsrichtung 10 zwischen ihrer jeweiligen Ausgangsstellung und ihrer jeweiligen Endstellung hin und her verfahrbar sind, so wie dies in Fig. 1 auch angedeutet ist. Zusätzlich kann auch vorgesehen sein, dass die Lageretagen 5 jeweils zusammen mit ihren in der Ausgangsstellung angeordneten Tuchabziehapparaten 6 nach Art einer Schublade mittels zumindest einer Auszugsvorrichtung 11 der jeweiligen Lageretage 5 parallel zu einer Querrichtung 12 des Wagens 1 aus dem Grundgestell 4 des Wagens 1 seitlich ausfahrbar und wieder in das Grundgestell 4 einfahrbar sind. Dabei sind die Längsrichtung 10 des Wagens 1 und die Querrichtung 12 des Wagens 1 zueinander orthogonal angeordnet. Details zu diesem seitlichen Ein- und Ausfahren der jeweiligen Lageretage 5 mittels der Auszugsvorrichtungen 11 werden weiter hinten anhand von Fig. 17 bis 19 erläutert.

In bevorzugten Ausgestaltungsformen, wie der hier gezeigten, ist der jeweilige Tuchabziehapparat 6 der jeweiligen Lageretage 5 mit dem zumindest einen Motor 7 der jeweiligen Lageretage 5 mittels einer Kopplungsvorrichtung 13 lösbar koppelbar. Im gekoppelten Zustand sorgt die Kopplungsvorrichtung 13 somit dafür, dass der jeweilige Tuchabziehapparat 6 mittels des jeweiligen Motors oder der jeweiligen Motoren 7 der jeweiligen Lageretage 5 zwischen seiner Ausgangsstellung und seiner Endstellung hin und her verfahrbar ist. Im entkoppelten Zustand lässt die Kopplungsvorrichtung 13 jedoch zu, dass der jeweilige Tuchabziehapparat 6 vom Motor 7 entkoppelt ist. Dies kann z.B., wie weiter hinten anhand von Fig. 13 erläutert, zum Bestücken des jeweiligen Tuchabziehapparats 6 mit neuen zu backenden Teigrohlingen genutzt werden.

Beim Detail B, welches in Fig. 3 vergrößert dargestellt ist, ist beispielhaft für die oberste Lageretage 5 des Wagens 1 gezeigt, wie eine solche Kopplungsvorrichtung 13 z.B. ausgebildet sein kann. Im hier realisierten Ausführungsbeispiel weist die Kopplungsvorrichtung 13 eine schwenkbar gelagerte Klinke 14 auf, welche in zumindest eine Klinkenaufnahme 15 im gekoppelten Zustand eingreifen kann und im entkoppelten Zustand von der Klinkenaufnahme 15 losgelöst ist. Die Klinke 14 ist im hier gezeigten Ausführungsbeispiel als ein schwenkbarer Haken ausgebildet, wie dies auch in anderen bevorzugten Varianten realisierbar ist. Bei der Klinkenaufnahme 15 handelt es sich im hier gezeigten Ausführungsbeispiel jeweils um eine Stange, welche auf einem Antriebsschlitten 31 fixiert ist. Natürlich könnten entsprechende Klinkenaufnahmen 15 auch anders ausgebildet sein. In der hier gezeigten Variante sind jeweils zwei Klinken 14 schwenkbar am jeweiligen Tuchabziehapparat 6 gelagert. Die entsprechenden Klinkenaufnahmen 15 sind über den Antriebsschlitten 31 im hier gezeigten Ausführungsbeispiel mittels der Motoren 7 der jeweiligen Lageretage 5 entlang der jeweiligen Lageretage 5 verfahrbar gelagert. Dies wird weiter hinten noch anhand der Fig. 4 bis 8 näher genauer erläutert. Natürlich wäre es aber auch denkbar, die Klinkenaufnahmen 15 am Tuchabziehapparat 6 und die schwenkbaren Klinken 14 am Antriebsschlitten 31 anzuordnen. Zur Betätigung, also zum Verschwenken der Klinke 14 zwischen dem in Fig. 11 noch einmal dargestellten gekoppelten Zustand und dem in Fig. 12 dargestellten entkoppelten Zustand ist im hier gezeigten Ausführungsbeispiel ein von Hand am Griff 58 betätigbarer Betätigungsmechanismus 30 vorgesehen. Auch dieser könnte natürlich grundsätzlich anders ausgebildet sein. Im gezeigten Ausführungsbeispiel reicht es jedenfalls am Griff 58 des Betätigungsmechanismus 30 zu ziehen, um die Klinke 14 in den entkoppelten Zustand zu bringen. Das Einklinken erfolgt automatisch der Schwerkraft folgend.

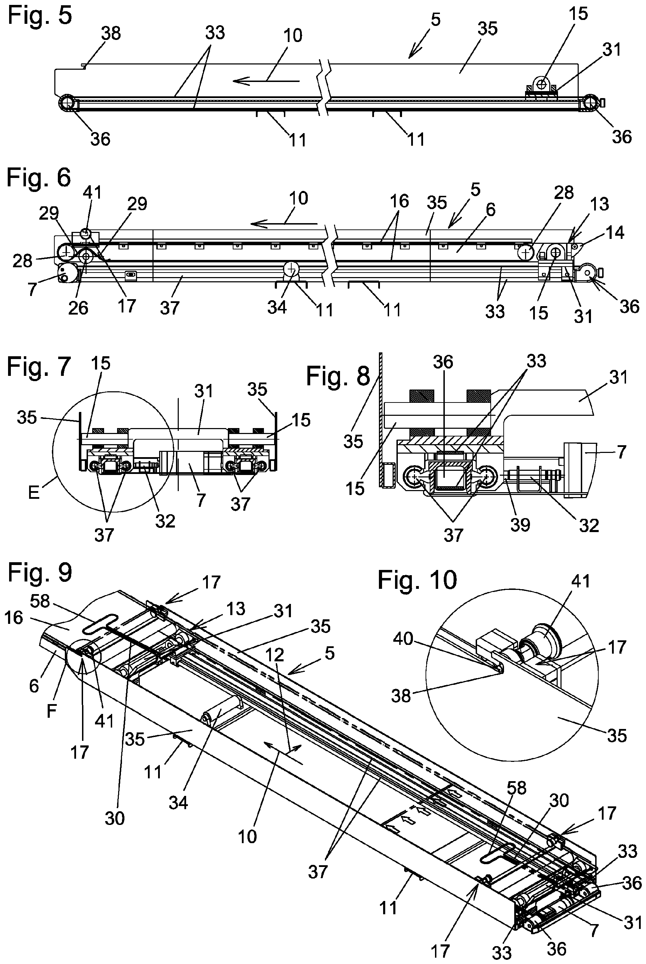

Jeder der Tuchabziehapparate 6 weist, wie beim Stand der Technik an sich bekannt, ein umlaufend verschiebbar gelagertes Abziehtuch 16 auf. Dies kann z.B. als ein Vlies oder dergleichen ausgebildet sein. Das jeweilige Abziehtuch 16 ist, wie weiter hinten anhand von Fig. 6 noch einmal im Detail erläutert, über zwei Umlenkrollen 28 umlaufend auf den jeweiligen Tuchabziehapparat 6 gespannt und kann über die Umlenkrollen 28 abrollen bzw. verschoben werden. Der in Fig. 2 vergrößert dargestellte Ausschnitt A aus Fig. 1 zeigt beispielhaft für den obersten Tuchabziehapparat 6 des Wagens 1, wie das Abziehtuch 16 über die vordere Umlenkrolle 28 des Tuchabziehapparates 6 läuft. Gezeigt ist auch die dort angeordnete vordere Laufrolle 26, mit der der Tuchabziehapparat 6 an seinem vorderen Ende beim Verfahren in der jeweiligen Backofenetage 23 an der Backfläche 27, also am Boden der jeweiligen Backofenetage 23, abrollend abgestützt ist. Um die Bauhöhe des Tuchabziehapparates 6 möglichst gering auszugestalten, ist das Abziehtuch 16, wie in Fig. 2 gut zu sehen, günstigerweise mittels der Umlenkflächen 29 um die vordere Laufrolle 26 herumgeführt.

Jedes Abziehtuch 16 ist in bevorzugten Ausführungsvarianten, wie der hier gezeigten, mittels zumindest einer lösbaren Verbindungseinrichtung 17 in einem verbundenen Zustand mit der jeweiligen Lageretage 5 verbunden und in einem losgelösten Zustand von der Lageretage 5 losgelöst. Die hier in diesem Ausführungsbeispiel realisierte bevorzugte Ausgestaltungsform der Verbindungseinrichtung 17 wird weiter hinten noch im Detail erläutert.

Mittels des erfindungsgemäßen Wagens 1 kann zum Befüllen der Backofenetagen 23 des Backofens 2 jedenfalls wie folgt vorgegangen werden: Eine einzelne, hier in Fig. 1 nicht dargestellte Bedienperson 42 kann den Wagen 1 für den Einbringvorgang vor den Backofen 2 schieben. Nach Erreichen der entsprechenden Ausrichtung des Wagens 1 relativ zum Backofen 2 kann der Wagen 1 mittels der Fixierungseinrichtung 20 lösbar auf dem Untergrund 21 fixiert werden. Anschließend kann die Bedienperson 42 über die Bedieneinheit 24 die Motoren 7 der einzelnen Lageretagen 5 individuell so ansteuern, dass die gewünschten Tuchabziehapparate 6 nacheinander oder gleichzeitig in die jeweiligen Backofenetagen 23 eingefahren werden. Dabei befinden sich auf den Abziehtüchern 16 der jeweiligen Tuchabziehapparate 6 jeweils die in die jeweilige Backofenetage 23 einzubringenden Teigrohlinge. Erreicht der jeweilige Tuchabziehapparat 6 seine maximal aus dem Wagen 1 ausgefahrene Endstellung, so verbindet die Verbindungseinrichtung 17, welche bevorzugt als Rasteinrichtung ausgebildet ist, das Abziehtuch 16 des jeweiligen Tuchabziehapparates 6 mit der jeweiligen Lageretage 5. Wird nun der Tuchabziehapparat 6 zurück in seine jeweilige Lageretage 5 in Richtung hin zu seiner Ausgangsstellung mittels des oder der Motoren 7 dieser Lageretage 5 eingezogen, so wird das mit der Lageretage 5 über die Verbindungseinrichtung 17 verbundene Abziehtuch 16 über die Umlenkrollen 28 des jeweiligen Tuchabziehapparates 6 abgerollt, wodurch die, sich auf dem Abziehtuch 16 befindenden, Teigrohlinge nacheinander auf der jeweiligen Backfläche 27 der jeweiligen Backofenetage 23 abgelegt werden. Günstig ist in diesem Zusammenhang, wenn die Umlenkrollen 28 einen relativ kleinen Durchmesser aufweisen. Hierdurch kann verhindert werden, dass die Teigrohlinge am Abziehtuch 16 kleben bleiben. Sind dann alle Teigrohlinge auf den Tuchabziehapparaten 6 entsprechend in die jeweiligen Backofenetagen 23 eingebracht und alle Tuchabziehapparate 6 mittels der Motoren 7 wieder maximal in den Wagen 1 in ihre Ausgangstellung eingefahren, so kann die Fixierungseinrichtung 20 wieder gelöst und der Wagen 1 gegebenenfalls mit den gekuppelten anderen Wägen 19 wieder vom Backofen 2 weggeschoben werden, um dann anschließend z.B. neue noch zu backende Teigrohlinge wieder auf den Abziehtüchern 16 der Tuchabziehapparate 6 anzuordnen, wie dies beispielhaft weiter hinten anhand von Fig. 13 erläutert wird. Der Vollständigkeit halber wird darauf hingewiesen, dass dieser Einbringvorgang der Teigrohlinge in den Backofen 2 in gleicher Art und Weise auch mit zwei mittels Kuppeleinrichtung 18 miteinander verbundenen Wägen 1 und 19 durchgeführt werden kann.

Fig. 4 zeigt nun eine Draufsicht auf eine der Lageretagen 5 des Wagens 1, wobei der dort angeordnete Tuchabziehapparat 6 in Fig. 4 nicht dargestellt ist. Fig. 5 zeigt den Längsschnitt parallel zur Längsrichtung 10 entlang der Schnittlinie CC aus Fig. 4. In diesem Ausführungsbeispiel sind pro Lageretage 5 zwei Motoren 7, welche bevorzugt als Elektromotoren ausgeführt sind, vorgesehen, um den in den Fig. 4 und 5 nicht dargestellten Tuchabziehapparat 6 zwischen seiner Ausgangsstellung und seiner Endstellung hin und her zu bewegen. Jeder dieser mittels der Steuereinrichtung 8 angesteuerten Motoren 7 treibt eine der Riemenscheiben 36 an. Über jeweils zwei Riemenscheiben 36, welche sich an einander entgegengesetzten Enden der Lageretage 5 befinden, ist ein Zahnriemen 33 gespannt. Die in diesem Ausführungsbeispiel vorgesehenen beiden Zahnriemen 33 verlaufen parallel zur Längsrichtung 10 und sind jeweils am Antriebsschlitten 31 befestigt. Der Antriebsschlitten 31 weist wiederum die hier als Stange ausgebildete Klinkenaufnahme 15 auf. An den Klinkenaufnahmen 15 kann der in den Fig. 4 und 5 nicht dargestellte Tuchabziehapparat 6 mittels der Kopplungsvorrichtung 13 bzw. seiner Klinke 14 angekoppelt werden. Durch entsprechendes Ansteuern der Motoren 7 mittels der Steuereinrichtung 8 bzw. der Bedieneinheit 24 werden die Zahnriemen 33 und damit auch der Antriebsschlitten 31 parallel zur Längsrichtung 10 bewegt, womit dann der entsprechend mittels der Kopplungsvorrichtung 13 mit dem Antriebsschlitten 31 und damit mit den Motoren 7 verbundene Tuchabziehapparat 6 zwischen seiner Ausgangsstellung und seiner Endstellung in den Richtungen parallel zur Längsrichtung 10 bewegt werden kann. Im gezeigten, wie auch in anderen bevorzugten Ausführungsbeispielen sind in der Lageretage 5 Endschalter 32 vorgesehen, welche dafür sorgen, dass die Steuereinrichtung 8 die Motoren 7 abschaltet, wenn der an den Antriebsschlitten 31 angekoppelte Tuchabziehapparat 6 seine maximal in den Wagen 1 eingefahrene Ausgangsstellung oder seine maximal aus dem Wagen 1 ausgefahrene Endstellung erreicht.

Der Tuchabziehapparat 6 wird einerseits, wie bereits ausgeführt, an den Klinkenaufnahmen 15 angekoppelt. Zusätzlich wird er auf der Laufrolle 34 der Lageretage 5 und/oder auf seiner Laufrolle 26 abgestützt, je nachdem wie weit der Tuchabziehapparat 6 ein- oder ausgefahren ist.

Zu den Seiten hin ist die Lageretage 5, in diesem wie auch in anderen bevorzugten Ausführungsbeispielen, jeweils von einer Bordwand 35 begrenzt. Die Bordwände 35 verlaufen günstigerweise, wie hier auch dargestellt, parallel zur Längsrichtung 10.

Fig. 7 zeigt einen Schnitt in Querrichtung 12 entlang der Schnittlinie DD aus Fig. 4 durch den Antriebsschlitten 31. Hier sind wiederum die Klinkenaufnahmen 15 sowie die Bordwände 35 gut zu sehen. In Fig. 7 und insbesondere auch in dem vergrößerten Bereich E, welcher in Fig. 8 dargestellt ist, sieht man auch die Führungsschienen 37, welche ebenfalls parallel zur Längsrichtung 10 verlaufen. Auf diesen Führungsschienen 37 ist der Antriebsschlitten 31 in den Richtungen parallel zur Längsrichtung 10 verschiebbar geführt und abgestützt. Insbesondere in Fig. 8 sieht man auch einen der Endschalter 32 sowie die mit dem Endschalter 32 zusammenwirkende Schaltfahne 39, welche am Antriebsschlitten 31 befestigt ist. Der Endschalter 32 erkennt die Anwesenheit der Schaltfahne 39 und damit des Antriebsschlittens 31 und gibt dann ein entsprechendes Signal an die Steuereinrichtung 8 weiter, dass die Ausgangsstellung bzw. die Endstellung erreicht ist und die Motoren 7 abgeschaltet werden.

In Fig. 6 ist eine ähnliche Darstellung wie in Fig. 5 gezeigt. Allerdings ist hier der Tuchabziehapparat 6 in seiner maximal in den Wagen 1 eingefahrenen Ausgangsstellung dargestellt. Die Kopplungsvorrichtung 13 befindet sich in ihrem gekoppelten Zustand, sodass der Tuchabziehapparat 6 mit dem Antriebsschlitten 31 verbunden ist. Gut zu sehen ist in Fig. 6 auch das über die Umlenkrollen 28 gespannte Abziehtuch 16 des Tuchabziehapparats 6 sowie die Verbindungseinrichtung 17, welche am Abziehtuch 16 fixiert ist. Die Verbindungseinrichtung 17 dient, wie eingangs bereits erläutert, der lösbaren Verbindung des Abziehtuchs 16 mit der Lageretage 5. Wie ebenfalls bereits weiter oben erläutert, dient diese Verbindung zwischen Abziehtuch 16 und Lageretage 5 dazu, dass das Abziehtuch 16 beim Zurückziehen des Tuchabziehapparates 6 aus seiner maximal aus dem Wagen 1 ausgefahrenen Endstellung in die maximal in den Wagen 1 eingefahrene Ausgangsstellung an der Lageretage 5 fixiert ist. Hierdurch läuft das Abziehtuch 16 bei diesem Einziehvorgang über die Umlenkrollen 28 des Tuchabziehapparates 6 ab, sodass beim Herausziehen des Tuchabziehapparates 6 aus der jeweiligen Backofenetage 23 die auf dem Abziehtuch 16 liegenden, zu backenden Teigrohlinge auf der jeweiligen Backfläche 27 abgelegt werden.

Fig. 9 zeigt eine perspektivische Ansicht von schräg oben auf die Lageretage 5, wobei auf der linken Seite der Tuchabziehapparat 6 und insbesondere auch die Verbindungseinrichtung 17 in der maximal aus dem Wagen 1 ausgefahrenen Endstellung und auf der rechten Seite der Fig. 9 gestrichelt in der maximal in den Wagen 1 eingefahrenen Ausgangsstellung dargestellt sind.

Fig. 10 zeigt den Bereich F aus Fig. 9 vergrößert. Dort ist besonders gut zu sehen, dass die Verbindungseinrichtung 17 in diesem wie auch in anderen bevorzugten Ausführungsbeispielen als eine Rastverbindung ausgebildet ist. Für diese Rastverbindung weisen die Bordwände 35 jeweils eine Ausnehmung 38 auf. Die Verbindungseinrichtung 17 weist jeweils den, in Richtung seiner in Fig. 10 dargestellten Eingriffsstellung elastisch vorgespannten Rastbolzen 40 auf. Am Rastbolzen 40 ist ein Zugknopf 41 befestigt. Die Federbelastung des Rastbolzens 40 drückt diesen immer gegen die Bordwand 35. Erreicht die jeweilige Verbindungseinrichtung 17 die auch in Fig. 5 dargestellte Ausnehmung 38, so rastet der Rastbolzen 40 aufgrund seiner Federbelastung automatisch in die Ausnehmung 38 ein. Durch Ziehen am Zugknopf 41 kann diese Rastverbindung wieder gelöst und damit die Verbindungseinrichtung 17 vom verbundenen Zustand in den losgelösten Zustand gebracht werden. Ausgehend von der maximal in den Wagen 1 eingefahrenen Ausgangsstellung, so wie sie in Fig. 9 auf der rechten Seite dargestellt ist, gleitet die Verbindungseinrichtung 17 mit ihrem Rastbolzen 40 beim Ausfahren des Tuchabziehapparates 6 in Richtung hin zu seiner Endstellung zunächst an der Bordwand 35 entlang. Beim Erreichen der maximal aus dem Wagen 1 ausgefahrenen Endstellung, wie sie in Fig. 9 auf der linken Seite dargestellt ist, kommt es automatisch zum Einrasten der jeweiligen Rastbolzen 40 in die jeweiligen Ausnehmungen 38, sodass mittels der Verbindungseinrichtungen 17 der verbundene Zustand hergestellt wird, in dem das Abziehtuch 16 mit der Lageretage 5 verbunden ist. Beim anschließenden Einfahren des Tuchabziehapparates 6 in seine Ausgangsstellung bleibt die Verbindung zwischen Abziehtuch 16 und Lageretage 5 mittels der Verbindungseinrichtungen 17 im verbundenen Zustand bestehen, sodass es entsprechend zum Ablegen der Teigrohlinge in der Backofenetage 23 kommt.

Der Vollständigkeit halber wird darauf hingewiesen, dass in bevorzugten Ausgestaltungsformen, wie in den Darstellungen auch gezeigt, auf beiden Seiten des Abziehtuchs 16 jeweils eine Verbindungseinrichtung 17 angeordnet ist, die dann entsprechend jeweils mit der dort vorhandenen Bordwand 35 der Lageretage 5 zusammenwirkt. Dies ist von der Einleitung der Kräfte her günstig aber nicht zwingend notwendig. Es sind auch Lösungen möglich, bei denen nur eine Verbindungseinrichtung 17 zur Verbindung von Abziehtuch 16 und Lageretage 5 vorgesehen ist.

Darüber hinaus ist darauf hinzuweisen, dass in bevorzugten Ausgestaltungsformen, wie der hier gezeigten, alle Lageretagen 5 und alle Tuchabziehapparate 6 in den jeweiligen Lageretagen 5 des Wagens 1 gleich ausgebildet sind. Auch dies ist aber natürlich nicht zwingend notwendig.

Fig. 13 ist nun eine schematische Darstellung zur Erläuterung einer bevorzugten Art und Weise, wie nach dem Einbringen der Teigrohlinge in die Backofenetagen 23 des Backofens 2 die Tuchabziehapparate 6 des Wagens 1 mit neuen zu backenden Teigrohlingen wieder beladen werden können. Hierzu wird der entladene Wagen 1 zunächst vom Backofen 2 weg hin zu einer hier nur sehr schematisch dargestellten Hebebühne 43 transportiert. Anschließend wird die Hebebühne 43 auf die Höhe einer der Lageretagen 5 gefahren. Mittels der Motoren 7 dieser Lageretage 5 kann dann der Tuchabziehapparat 6 dieser Lageretage 5 in die maximal aus dem Wagen 1 ausgefahrene Endstellung ausgefahren und dabei auf der Hebebühne 43 abgelegt werden. Nach Lösen der Kopplungsvorrichtung 13 und damit nach Trennen des Tuchabziehapparates 6 vom Antriebsschlitten 31, kann die Hebebühne 43 auf eine Höhe gefahren werden, die für die in Fig. 13 schematisiert dargestellte Bedienperson 42 eine optimale Arbeitshöhe zum Beladen des Tuchabziehapparates 6 bzw. dessen Abziehtuchs 16 mit neuen Teigrohlingen darstellt. Anschließend wird das Abziehtuch 16 durch entsprechendes Verschieben über die Umlenkrollen 28 wieder in seine Ausgangsstellung gebracht, indem die in Fig. 13 gezeigte Verbindungseinrichtungen 17 samt Abziehtuch 16 von der in Fig. 13 dargestellten linken Position in die in Fig. 13 nicht dargestellte ganz rechte Ausgangsposition zurückgeschoben wird. Dies kann z.B. von der Bedienperson 42 von Hand vorgenommen werden. Anschließend können dann die neuen zu backenden Teigrohlinge auf dem Abziehtuch 16 des Tuchabziehapparates 6 abgelegt werden. Ist dieser Vorgang abgeschlossen, so wird der nun frisch beladene Tuchabziehapparat 6 mittels der Hebebühne 43 wieder in die entsprechende Höhe der Lageretage 5, aus der er entnommen wurde, zurückgefahren. Der Tuchabziehapparat 6 wird mittels der Kopplungsvorrichtung 13 wieder an den Antriebsschlitten 31 dieser Lageretage 5 angekoppelt. Anschließend kann der Tuchabziehapparat 6 mittels des Motors 7 bzw. der Motoren 7 dieser Lageretage 5 wieder in seine maximal in den Wagen 1 eingefahrene Ausgangsstellung zurückgezogen werden. Dieser Vorgang wird für alle Tuchabziehapparate 6 aus allen Lageretagen 5 des Wagens 1 nacheinander durchgeführt, sodass der Wagen 1 dann anschließend für den nächsten Vorgang des Einbringens der Teigrohlinge in die verschiedenen Backofenetagen 23 des Backofens 2 wieder vorbereitet ist.

Fig. 14 zeigt einen oberen Bereich von zwei mittels einer Kuppeleinrichtung 18 miteinander verbundenen Wägen 1 und 19. Bevorzugt sind beide Wägen 1 und 19 baugleich ausgeführt. In Fig. 14 ist zunächst gut zu erkennen, dass das Grundgestell 4 jedes Wagens 1 bzw. 19 in bevorzugten Ausgestaltungsformen wie den hier gezeigten, aus Vertikalträgern 44 und daran mittels Klemmschellen 46 befestigten Horizontalträgern 45 zusammengesetzt ist. Bevorzugt bestehen die Vertikalträger 44 und die Horizontalträger 45 aus Hohlprofilen. Die Lageretagen 5 der Wägen 1 bzw. 19 sind jeweils an den Horizontalträgern 45 befestigt. Durch die Befestigung der Horizontalträger 45 mittels der Klemmschellen 46 an den Vertikalträgern 44 des Grundgestells 4 ist es möglich, die Höhe der Lageretagen 5 und damit auch der darin gelagerten Tuchabziehapparate 6 an die entsprechenden Höhen der verschiedenen Backofenetagen 23 des Backofens 2 anzupassen. Wird diese Einstellbarkeit der Höhenlage der Lageretagen 5 nicht benötigt, so können die Horizontalträger 45 und die Vertikalträger 44 natürlich auch in anderer geeigneter Art und Weise, z.B. durch Verschweißen oder dergleichen, fix miteinander verbunden werden.

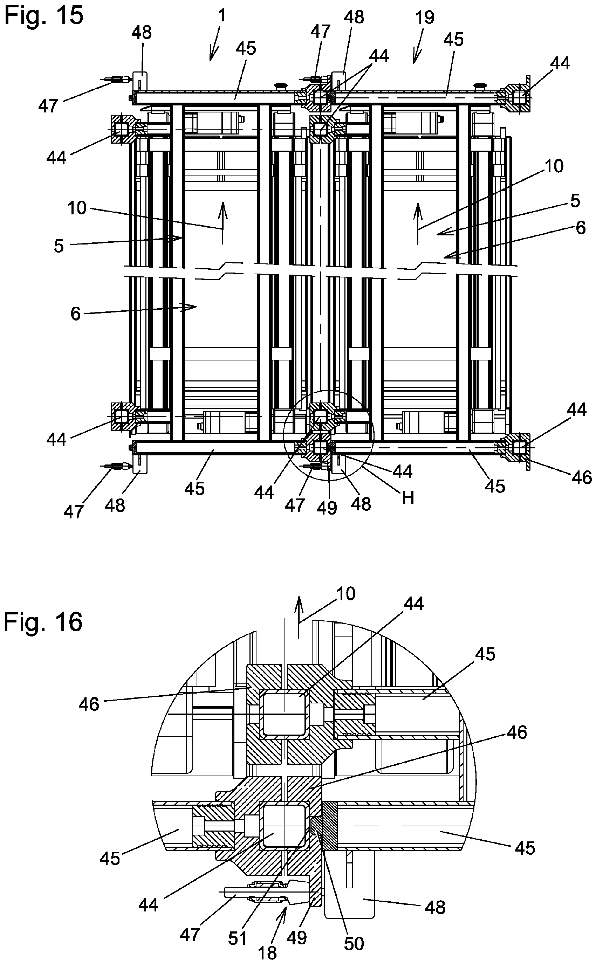

Anhand der Fig. 14 bis 16 wird nun nachfolgend noch erläutert, wie in diesem und auch in anderen bevorzugten Ausführungsbeispielen der Erfindung der Wagen 1 mit einem anderen Wagen 19 mittels der Kuppeleinrichtung 18 verbunden werden kann, um so einerseits noch gut handhabbare Wägen 1 bzw. 19 zu realisieren und andererseits aber auch eine Backofenetage 23 auf ihrer vollen Breite mit Teigrohlingen beladen zu können. Fig. 14 zeigt, wie gesagt, den oberen Bereich von zwei miteinander gekuppelten Wägen 1 und 19. Fig. 15 zeigt den Horizontalschnitt entlang der Schnittlinie GG aus Fig. 14 und Fig. 16 zeigt das Detail H aus Fig. 15.

Um eine Totfläche zwischen den Tuchabziehapparaten 6 zweier benachbarter Lageretagen 5 der Wägen 1 und 19 möglichst klein zu halten, ist in bevorzugten Ausführungsvarianten, wie der hier gezeigten, vorgesehen, dass die Vertikalträger 44 des Grundgestells 4 des jeweiligen Wagens 1 bzw. 19 in Längsrichtung 10 zueinander versetzt angeordnet sind. Dies ist in Fig. 15 gut zu erkennen. Die in Fig. 15 jeweils linken Vertikalträger 44 des jeweiligen Grundgestells 4 des jeweiligen Wagens 1 bzw. 19 sind gegenüber den jeweils rechten Vertikalträgern 44 des jeweiligen Grundgestells 4 des jeweiligen Wagens 1 bzw. 19 etwas in Richtung Wagenmitte versetzt, sodass beim Zusammenfügen der beiden Wägen 1 und 19 eine gewisse Verschachtelung der beiden Wägen ineinander erfolgt, wie dies in Fig. 15 gut zu erkennen ist.

Die zum miteinander Verbinden bzw. Kuppeln der Wägen 1 und 19 verwendeten Kuppeleinrichtungen 18 weisen im hier gezeigten Ausführungsbeispiel jeweils einen, auf der rechten Seite am Horizontalträger 45 angeordneten und von Hand bedienbaren Kniehebel 47 auf, welcher mittels des jeweiligen Kniehebelträgers 48 am jeweiligen Horizontalträger 45 bzw. am Grundgestell 4 angebracht ist. Auf der gegenüberliegenden Seite befindet sich in diesem Ausführungsbeispiel an der Klemmschelle 46 jeweils ein Klemmfortsatz 49. Wie insbesondere gut in Fig. 16 zu sehen ist, wird zum Verbinden der beiden Wägen 1 und 19 mittels der Kuppeleinrichtung 18 der jeweilige Klemmfortsatz 49 des einen Wagens zwischen den Kniehebel 47 und den Kniehebelträger 48 des anderen Wagens eingebracht. Durch Schließen des Kniehebels 47 wird dann der Klemmfortsatz 49 zwischen Kniehebel 47 und Kniehebelträger 48 festgeklemmt. Wird dies für alle Kuppeleinrichtungen 18 entsprechend durchgeführt, so sind die beiden Wägen 1 und 19 dann entsprechend fest miteinander verbunden. Durch entsprechendes Lösen der Kniehebel 47 kann diese Verbindung wieder aufgehoben werden, sodass die Wägen 1 und 19, z.B. zum Wiederbefüllen, wieder getrennt voneinander verfahren werden können. Zur optimalen Ausrichtung der Wägen 1 und 19 relativ zueinander sind in bevorzugten Ausgestaltungsformen, wie den hier gezeigten, an den Horizontalträgern 45 bzw. am Grundgestell 4 noch Zentrierdorne 50 angeordnet, welche zur idealen Positionierung der beiden Wägen 1 und 19 relativ zueinander in Zentrierdornaufnahmen 51 am jeweils anderen Wagen 1 bzw. 19 eingefahren werden. Dies ist natürlich nur ein optionales Merkmal und könnte auch anders gelöst werden.

Eingangs wurde bereits erläutert, dass bei bevorzugten Ausgestaltungsformen der Erfindung vorgesehen ist, dass jede Lageretage 5 mit ihrem in der Ausgangsstellung angeordneten Tuchabziehapparat 6 mittels zumindest einer Auszugsvorrichtung 11 der jeweiligen Lageretage 5 parallel zu der Querrichtung 12 des Wagens 1 aus dem Grundgestell 4 des Wagens 1 seitlich ausfahrbar und wieder in das Grundgestell 4 einfahrbar ist. Meist sind hierzu, wie auch in diesem Ausführungsbeispiel zumindest zwei Auszugsvorrichtungen 11 pro Lageretage 5 vorgesehen. Dies ist nun beispielhaft anhand von einer der Lageretagen 5 in Fig. 17 dargestellt. Bei den Auszugsvorrichtungen 11 kann es sich um an sich bekannte, in sich teleskopierbare Schienensysteme handeln, welche es erlauben, die jeweilige Lageretage 5 zusammen mit dem darin in der Ausgangsstellung angeordneten Tuchabziehapparat 6 zur Seite hin, also in Querrichtung 12, aus dem Grundgestell 4 des Wagens 1 herauszufahren. Dies ist günstigerweise bei allen Lageretagen 5 des Wagens 1 so realisiert, auch wenn in Fig. 17 nur eine der Lageretagen 5 in der ausgezogenen Position dargestellt ist.

Um ein ungewolltes seitliches Herausfahren der jeweiligen Lageretage 5 samt Tuchabziehapparat 6 zu verhindern, ist in bevorzugten Ausgestaltungsformen, wie der hier dargestellten, günstigerweise eine Auszugsfixierung 52 vorgesehen, mit der ein ungewolltes seitliches Herausfahren der Lageretage 5 aus dem Grundgestell 4 verhindert wird. Im hier gezeigten Ausführungsbeispiel ist diese Auszugsfixierung 52 wiederum als Rasteinrichtung ausgeführt. Dies muss aber natürlich nicht zwingend so sein, es könnten auch Schraub- oder Klemmverbindungen oder dergleichen zum Einsatz kommen. Fig. 18 zeigt jedenfalls den Horizontalschnitt entlang der Schnittlinie II aus Fig. 17 und Fig. 19 den Bereich J aus Fig. 18 vergrößert. In Fig. 19 ist gut zu erkennen, dass die Auszugsfixierung 52 dieses Ausführungsbeispiels einen Bedienknopf 53 und einen Rastdorn 54 aufweist. Dieser Rastdorn 54 ist in Richtung hin zur Rastdornaufnahme 55 federbelastet, wobei sich die Rastdornaufnahme 55 wiederum in einer an der Lageretage 5 befestigten Kulisse 56 befindet. In der in Fig. 19 dargestellten eingerasteten Stellung sichert die Auszugsfixierung 52 die Lageretage 5 gegen ein ungewolltes seitliches Ausfahren in Querrichtung 12. Soll die entsprechende Lageretage 5 aus dem Grundgestell 4 seitlich herausgefahren werden, so wird durch Ziehen am Bedienknopf 53 der Rastdorn 54 aus der Rastdornaufnahme 55 herausgezogen, sodass die Auszugsfixierung 52 die Lageretage 5 zum seitlichen Herausfahren in Querrichtung 12 freigibt. Das Einrasten des Rastdorns 54 in die Rastdornaufnahme 55 erfolgt beim Einfahren der Lageretage 5 in das Grundgestell 4 bevorzugt automatisch aufgrund der Federbelastung des Rastdorns 54.

Zusätzlich zu dieser manuellen Sicherung kann auch noch eine Auszugsabfrage 57 vorgesehen sein. Dies kann z.B. ein Näherungsschalter oder dergleichen sein, mit dem messtechnisch festgestellt werden kann, ob sich die Lageretage 5 in der vollständig in das Grundgestell 4 eingefahrenen Stellung befindet oder nicht.

### Legende zu den Hinweisziffern:

| | | | |
|---|---|---|---|
| 1 | Wagen | 30 | Betätigungsmechanismus |
| 2 | Backofen | 31 | Antriebsschlitten |
| 3 | Laufrad | 32 | Endschalter |
| 4 | Grundgestell | 33 | Zahnriemen |
| 5 | Lageretage | 34 | Laufrolle |
| 6 | Tuchabziehapparat | 35 | Bordwand |
| 7 | Motor | 36 | Riemenscheibe |
| 8 | Steuereinrichtung | 37 | Führungsschiene |
| 9 | Akkumulator | 38 | Ausnehmung |
| 10 | Längsrichtung | 39 | Schaltfahne |
| 11 | Auszugsvorrichtung | 40 | Rastbolzen |
| 12 | Querrichtung | 41 | Zugknopf |
| 13 | Kopplungsvorrichtung | 42 | Bedienperson |
| 14 | Klinke | 43 | Hebebühne |
| 15 | Klinkenaufnahme | 44 | Vertikalträger |
| 16 | Abziehtuch | 45 | Horizontalträger |
| 17 | Verbindungseinrichtung | 46 | Klemmschelle |
| 18 | Kuppeleinrichtung | 47 | Kniehebel |
| 19 | anderer Wagen | 48 | Kniehebelträger |
| 20 | Fixierungseinrichtung | 49 | Klemmfortsatz |
| 21 | Untergrund | 50 | Zentrierdorn |
| 22 | Wanne | 51 | Zentrierdornaufnahme |
| 23 | Backofenetage | 52 | Auszugsfixierung |
| 24 | Bedieneinheit | 53 | Bedienknopf |
| 25 | Fixierungsloch | 54 | Rastdorn |
| 26 | Laufrolle | 55 | Rastdornaufnahme |
| 27 | Backfläche | 56 | Kulisse |
| 28 | Umlenkrolle | 57 | Auszugsabfrage |
| 29 | Umlenkfläche | 58 | Griff |

## Patentansprüche

1. Wagen (1) zum Einbringen von zu backenden Teigrohlingen in einen mehretagigen Backofen (2), wobei der Wagen (1) Laufräder (3) und ein verfahrbar auf den Laufrädern (3) gelagertes Grundgestell (4) und am Grundgestell übereinander angeordnete Lageretagen (5) aufweist, wobei in den Lageretagen (5) jeweils ein Tuchabziehapparat (6) des Wagens (1) motorisch angetrieben zwischen einer maximal in den Wagen (1) eingefahrenen Ausgangsstellung und einer maximal aus dem Wagen (1) ausgefahrenen Endstellung hin und her verfahrbar gelagert ist, **dadurch gekennzeichnet, dass** jede Lageretage (5) zumindest einen eigenen Motor (7) zum hin und her Verfahren des jeweiligen Tuchabziehapparates (6) dieser Lageretage (5) zwischen seiner Ausgangsstellung und seiner Endstellung aufweist, und dass der Wagen (1) zumindest eine Steuereinrichtung (8) aufweist, mit der der zumindest eine Motor (7) jeder Lageretage (5) unabhängig von den Motoren (7) der anderen Lageretagen (5) des Wagens (1) zum hin und her Verfahren des jeweiligen Tuchabziehapparates (6) in dieser Lageretage (5) zwischen seiner Ausgangsstellung und seiner Endstellung ansteuerbar ist.

2. Wagen (1) nach Anspruch 1, **dadurch gekennzeichnet, dass** der Wagen (1) zumindest einen wiederaufladbaren Akkumulator (9) zur Versorgung der Motoren (7) der Lageretagen (5) mit elektrischem Strom aufweist.

3. Wagen (1) nach Anspruch 1 oder 2, **dadurch gekennzeichnet, dass** der Wagen (1), die Lageretagen (5) und die jeweiligen Tuchabziehapparate (6) parallel zu einer Längsrichtung (10) des Wagens (1) längserstreckt sind und die Tuchabziehapparate (6) in der jeweiligen Lageretage (5) jeweils parallel zur Längsrichtung (10) zwischen ihrer jeweiligen Ausgangsstellung und ihrer jeweiligen Endstellung hin und her verfahrbar sind und jede Lageretage (5) mit ihrem in der Ausgangsstellung angeordneten Tuchabziehapparat (6) mittels zumindest einer Auszugsvorrichtung (11) der jeweiligen Lageretage (5) parallel zu einer Querrichtung (12) des Wagens (1) aus dem Grundgestell (4) des Wagens (1) seitlich ausfahrbar und wieder in das Grundgestell (4) einfahrbar ist, wobei die Längsrichtung (10) des Wagens (1) und die Querrichtung (12) des Wagens (1) zueinander orthogonal angeordnet sind.

4. Wagen (1) nach einem der Ansprüche 1 bis 3, **dadurch gekennzeichnet, dass** der jeweilige Tuchabziehapparat (6) der jeweiligen Lageretage (5) und der zumindest eine Motor (7) der jeweiligen Lageretage (5) mittels einer Kopplungsvorrichtung (13) in einem gekoppelten Zustand miteinander gekoppelt und in einem entkoppelten Zustand voneinander entkoppelt sind.

5. Wagen (1) nach Anspruch 4, **dadurch gekennzeichnet, dass** die Kopplungsvorrichtung (13) der jeweiligen Lageretage (5) durch zumindest eine schwenkbar gelagerte Klinke (14) und zumindest eine Klinkenaufnahme (15) gebildet ist, wobei die Klinke (14) in dem gekoppelten Zustand der Kopplungsvorrichtung (13) in die Klinkenaufnahme (15) eingreift und in dem entkoppelten Zustand von der Klinkenaufnahme (15) losgelöst ist.

6. Wagen (1) nach Anspruch 5, **dadurch gekennzeichnet, dass** die zumindest eine Klinke (14) schwenkbar am jeweiligen Tuchabziehapparat (6) gelagert ist und die zumindest eine Klinkenaufnahme (15) mittels des zumindest einen Motors (7) der jeweiligen Lageretage (5) entlang der jeweiligen Lageretage (5) verfahrbar gelagert ist.

7. Wagen (1) nach einem der Ansprüche 1 bis 6, **dadurch gekennzeichnet, dass** der jeweilige Tuchabziehapparat (6) ein umlaufend verschiebbar gelagertes Abziehtuch (16) aufweist, wobei das Abziehtuch (16) mittels einer lösbaren Verbindungseinrichtung (17) in einem verbundenen Zustand mit der jeweiligen Lageretage (5) verbunden und in einem losgelösten Zustand von der Lageretage (5) losgelöst ist.

8. Wagen (1) nach einem der Ansprüche 1 bis 7, **dadurch gekennzeichnet, dass** der Wagen (1) zumindest eine Kuppeleinrichtung (18) zum lösbaren Verbinden des Wagens (1) mit einem anderen Wagen (19), vorzugsweise gleicher Bauart, aufweist.

9. Wagen (1) nach einem der Ansprüche 1 bis 8, **dadurch gekennzeichnet, dass** der Wagen (1) eine Fixierungseinrichtung (20) zum lösbaren Fixieren des Wagens (1) vor dem Backofen (2), vorzugsweise auf einem Untergrund (21), aufweist.

## Claims

1. Trolley (1) for loading preformed dough products, which are to be baked, in a multi-deck oven (2), the trolley (1) having wheels (3), a base frame (4) movably mounted on the wheels (3) and storage levels (5) arranged one above the other on the base frame, a setter (6) of the trolley (1) being mounted in each storage level (5) so as to be movable back and forth in a motor-driven manner between a starting position maximally retracted into the trolley (1) and an end position maximally extended out of the trolley (1), **characterised in that** each storage level (5) has at least one dedicated motor (7) for moving the respective setter (6) of that storage level (5) back and forth between its starting position and its end position, and **in that** the trolley (1) has at least one control device (8) by which the at least one motor (7) of each storage level (5) can be actuated, independently of the motors (7) of the other storage levels (5) of the trolley (1), to move the respective setter (6) **in that** storage level (5) back and forth between its starting position and its end position.

2. Trolley (1) according to claim 1, **characterised in that** the trolley (1) has at least one rechargeable accumulator (9) for supplying electrical current to the motors (7) of the storage levels (5).

3. Trolley (1) according to claim 1 or claim 2, **characterised in that** the trolley (1), the storage levels (5) and the respective setters (6) are elongate in parallel with a longitudinal direction (10) of the trolley (1), and the setters (6) in each storage level (5) are each movable back and forth in parallel with the longitudinal direction (10) between their respective starting position and their respective end position, and each storage level (5) can, with its setter (6) arranged in the starting position, be extended sideways out of the base frame (4) of the trolley (1) in parallel with a transverse direction (12) of the trolley (1) and retracted back into the base frame (4) by means of at least one extraction apparatus (11) of that storage level (5), the longitudinal direction (10) of the trolley (1) and the transverse direction (12) of the trolley (1) being arranged orthogonally to one another.

4. Trolley (1) according to any of claims 1 to 3, **characterised in that**, by means of a coupling apparatus (13), the respective setter (6) of each storage level (5) and the at least one motor (7) of each storage level (5) are coupled together in a coupled state and decoupled from one another in a decoupled state.

5. Trolley (1) according to claim 4, **characterised in that** the coupling apparatus (13) of each storage level (5) is formed by at least one pivotally mounted latch (14) and at least one latch seat (15), the latch (14) engaging in the latch seat (15) when the coupling apparatus (13) is in the coupled state and being separated from the latch seat (15) in the decoupled state.

6. Trolley (1) according to claim 5, **characterised in that** the at least one latch (14) is pivotally mounted on the respective setter (6), and the at least one latch seat (15) is mounted so as to be movable along the respective storage level (5) by means of the at least one motor (7) of that storage level (5).

7. Trolley (1) according to any of claims 1 to 6, **characterised in that** each setter (6) comprises a removal cloth (16) mounted so as to be displaceable in a circulatory manner, the removal cloth (16) being connected to the respective storage level (5) by means of a releasable connection device (17) when in a connected state and being separated from the storage level (5) when in a separated state.

8. Trolley (1) according to any of claims 1 to 7, **characterised in that** the trolley (1) comprises at least one interlocking device (18) for releasably connecting the trolley (1) to another trolley (19), preferably of the same design.

9. Trolley (1) according to any of claims 1 to 8, **characterised in that** the trolley (1) comprises a securing device (20) for releasably securing the trolley (1) in front of the oven (2), preferably on a ground (21).

## Revendications

1. Chariot (1) pour introduire des pâtons à cuire dans un four de cuisson (2) à plusieurs étages, le chariot (1) étant muni de roues de roulement (3) et d'un châssis de base (4) mobile logé sur les roues de roulement (3), et d'étages de stockage (5) disposés les uns au-dessus des autres sur le châssis de base, un appareil de retrait de toile (6) du chariot (1.) étant logé mobile dans chacun des étages de palier (5) de manière à pouvoir être entraîné dans un sens et dans l'autre par un moteur entre une position initiale rentrée au maximum dans le chariot (1) et une position finale sortie au maximum du chariot (1), **caractérisé en ce que** chaque étage de stockage (5) est muni d'au moins un moteur (7) qui lui est propre pour déplacer dans un sens et dans l'autre l'appareil de retrait de toile (6) respectif de cet étage de stockage (5) entre sa position initiale et sa position finale, et **en ce que** le chariot (1) est muni d'au moins un dispositif de commande (8) avec lequel ledit au moins un moteur (7) de chaque étage de stockage (5) peut être commandé indépendamment des moteurs (7) des autres étages de stockage (5) du chariot (1) pour déplacer dans un sens et dans l'autre l'appareil de retrait de toile (6) respectif dans cet étage de stockage (5) entre sa position initiale et sa position finale.

2. Chariot (1) selon la revendication 1, **caractérisé en ce que** le chariot (1) est muni d'au moins un accumulateur rechargeable (9) pour alimenter en courant électrique les moteurs (7) des étages de stockage (5).

3. Chariot (1) selon la revendication 1 ou 2, **caractérisé en ce que** le chariot (1), les étages de stockage (5) et les appareils de retrait de toile (6) respectifs sont allongés parallèlement à une direction longitudinale (10) du chariot (1), et les appareils de retrait de toile (6) peuvent être déplacés dans un sens et dans l'autre dans l'étage de stockage (5) respectif parallèlement à la direction longitudinale (10) entre leur position initiale respective et leur position finale respective, et chaque étage de stockage (5) avec son appareil de retrait de toile (6) disposé dans la position initiale peut être sorti latéralement du châssis de base (4) du chariot (1) parallèlement à une direction transversale (12) du chariot (1) et rentré à nouveau dans le châssis de base (4) au moyen d'au moins un dispositif d'extraction (11) de l'étage de stockage (5) respectif, la direction longitudinale (10) du chariot (1) et la direction transversale (12) du chariot (1) étant disposées orthogonalement l'une par rapport à l'autre.

4. Chariot (1) selon l'une des revendications 1 à 3, **caractérisé en ce que** l'appareil de retrait de toile (6) de chaque étage de stockage (5) et ledit au moins un moteur (7) de l'étage de stockage (5) respectif sont couplés ensemble dans un état couplé au moyen d'un dispositif de couplage (13) et découplés l'un de l'autre dans un état découplé.

5. Chariot (1) selon la revendication 4, **caractérisé en ce que** le dispositif de couplage (13) de chaque étage de palier (5) est formé par au moins un cliquet (14) logé basculant et au moins un logement de cliquet (15), le cliquet (14) s'engageant dans le logement de cliquet (15) à l'état couplé du dispositif d'accouplement (13) et étant détaché du logement de cliquet (15) à l'état découplé.

6. Chariot (1) selon la revendication 5, **caractérisé en ce que** ledit au moins un cliquet (14) est logé basculant sur l'appareil de retrait de toile (6) respectif, et ledit au moins un logement de cliquet (15) est logé mobile le long de l'étage de stockage (5) respectif au moyen dudit au moins un moteur (7) de l'étage de stockage (5) respectif.

7. Chariot (1) selon l'une des revendications 1 à 6, **caractérisé en ce que** chaque appareil de retrait de toile (6) est muni d'une toile de retrait (16) montée mobile de façon circulaire, la toile de retrait (16) étant reliée à l'étage de palier (5) respectif au moyen d'un dispositif de liaison (17) détachable dans un état relié, et étant détachée de l'étage de palier (5) dans un état détaché.

8. Chariot (1)-selon l'une des revendications 1 à 7, **caractérisé en ce que** le chariot (1) est muni d'au moins un dispositif d'accouplement (18) pour relier de manière détachable le chariot (1) à un autre chariot (19), de préférence de même type de construction.

9. Chariot (1) selon l'une des revendications 1 à 8, **caractérisé en ce que** le chariot (1) est muni d'un dispositif de fixation (20) pour fixer de manière détachable le chariot (1) devant le four de cuisson (2), de préférence sur un sol support (21).
